# EUROPEAN PATENT APPLICATION

(11) **EP 4 517 875 A1**
(43) Date of publication of application: **05.03.2025**
(21) Application number: 23896104.9
(22) Date of filing: 07.08.2023
(51) Int. Cl.: H01M 4/36, H01M 4/525, H01M 4/505, H01M 4/485, H01M 10/0525, C01G 53/00, H01M 4/02

(54) **POSITIVE ELECTRODE ACTIVE MATERIAL AND PREPARATION METHOD THEREFOR, SECONDARY BATTERY AND ELECTRIC DEVICE**

(30) Priority: 01.12.2022 CN 202211525557
(71) Applicant: Contemporary Amperex Technology (Hong Kong) Limited, Hong Kong (HK)
(72) Inventor: ZHANG, Qiyu, Ningde, Fujian 352100 (CN); WU, Qi, Ningde, Fujian 352100 (CN); CHEN, Qiang, Ningde, Fujian 352100 (CN); LIU, Na, Ningde, Fujian 352100 (CN); FAN, Jingpeng, Ningde, Fujian 352100 (CN)
(74) Representative: Kraus & Lederer PartGmbB
(86) International application number: PCT/CN2023/111442
(87) International publication number: WO 2024/113942

(57) **Abstract**

A positive active material and a preparation method therefor. The positive active material has a chemical formula of Li₁₊ₐ[NiₓCo_{y}Mn_{z}M1_{b}M2_{c}]O₂, where, 0.05 < a < 0.5, 1/3 ≤ x < 1, 0 ≤ y < 1/3, 0 ≤ z < 1/3, 0 < b < 0.1, 0 < c < 0.1, x + y + z + b + c = 1, M1 is one or more elements selected from Mo, Zr, W, Sb, Nb, Te or Ga, and M2 is one or more elements selected from Mg, Al, Ca or Ti. The positive active material includes a lithium-rich layer extending from the particle surface to the interior of the particle, and in a cross section passing through the geometric center of a single particle of the positive active material, a ratio of an average Li element content per unit area in the lithium-rich layer to an average Li element content per unit area in a non-lithium-rich layer is (> 1 to 1.5):1. The positive active material has a high compaction density and improved structural stability, effectively improves the energy density of a battery, and improves the cycle performance and safety performance of the battery.

## Description

### TECHNICAL FIELD

The present application relates to the technical field of lithium batteries, and in particular, to a positive active material and a preparation method therefor, and a secondary battery and an electrical device including the positive active material.

### BACKGROUND

In recent years, as the application scope of lithium-ion batteries has become more and more extensive, the lithium-ion batteries have been widely used in energy storage power systems such as hydropower, thermal power, wind power and solar power stations, as well as a plurality of fields such as power tools, electric bicycles, electric motorcycles, electric vehicles, military equipment, and aerospace. As the lithium-ion batteries have made great progress, higher requirements have been put forward for their energy density, cycle performance and safety performance.

The positive electrode material is an important component of the lithium-ion batteries. It not only affects the safety and cost of the batteries, but also is a key factor that directly determines the electrochemical performance and life of the batteries. At present, common positive electrode materials include layered structure materials (such as lithium cobalt oxide, lithium manganese oxide, and lithium nickel oxide), spinel structure materials, polyanion materials and ternary materials, etc. Among them, layered lithium-rich ternary positive electrode materials are a type of positive electrode material that has attracted much attention in recent years. It has the advantages of high specific discharge capacity (> 250 mA·h/g), energy density (above 300 Wh/kg), working voltage range (3.7 to 4.8 V), low cost and environmental friendliness, and is generally considered to be one of the best choices for the next generation of battery positive electrode materials. However, due to the structural instability of the lithium-rich ternary positive electrode material itself, there will be serious problems such as layered structure destruction, oxygen precipitation and capacity attenuation in the charge and discharge process, and problems of the charge and discharge process. These problems have hindered the further development of lithium-rich ternary positive electrode materials to a certain extent. Therefore, certain strategies need to be adopted to optimize lithium-rich ternary positive electrode materials, so as to improve the structural stability of lithium-rich ternary materials, inhibit voltage attenuation, and inhibit side reactions with an electrolyte solution, etc.

### SUMMARY

The present application is made in view of the above-mentioned problems, and aims to provide a positive active material with improved structural stability and high compaction density, and to provide a preparation method for the positive active material, as well as a positive electrode plate, a secondary battery and an electrical device including the positive active material of the present application.

In order to achieve the above-mentioned objective, a first aspect of the present application provides a positive active material, characterized in that a chemical formula of the positive active material is Li₁₊ₐ[NiₓCo_{y}Mn_{z}M1_{b}M2_{c}]O₂, where, 0.05 < a < 0.5, 1/3 ≤ x < 1, 0 ≤ y < 1/3, 0 ≤ z < 1/3, 0 < b < 0.1, 0 < c < 0.1, x + y + z + b + c = 1, M1 is one or more elements selected from Mo, Zr, W, Sb, Nb, Te and Ga, M2 is one or more elements selected from Mg, Al, Ca or Ti, and optionally, 0.1 < a < 0.2, 0.6 ≤ x < 1,

the positive active material is in a shape of particles, including a lithium-rich layer extending from a particle surface to an interior of the particle. In a single particle of the positive active material, on a cross section passing through the geometric center of the particle, a ratio of an average Li element content per unit area in the lithium-rich layer to an average Li element content per unit area in the non-lithium-rich layer is (> 1 to 1.5): 1, and optionally (1.05 to 1.2): 1.

Therefore, compared with the prior art, the present application at least includes the following beneficial effects:
(2) The positive active material of the present application not only has a high compaction density, which can effectively improve the energy density of the battery, but also has improved structural stability and effectively prevents the electrolyte solution from having side reactions on the surface of the positive active material, thereby improving the cycle performance and safety performance of the battery.
(3) The positive active material of the present application has the lithium-rich layer. In the charge and discharge process, on the one hand, it is beneficial to maintaining the stable layered structure of the positive active material, and on the other hand, it is conducive to promoting the intra-layer migration of Ni and inhibiting the inter-layer migration of Ni, and effectively reducing the lithium-nickel mixing degree. At the same time, the vacancy clusters formed by Ni migration can fix the activated lattice oxygen and reduce oxygen release, thereby improving the cycle performance and safety performance of the battery.

In any embodiment, the positive active material satisfies: k = 2t/Dv50, and k is greater than 0 to 0.6, optionally 0.01 to 0.3, where t is a thickness of the lithium-rich layer extending from a particle surface to an interior of the particle of the positive active material, and the Dv50 is a corresponding particle diameter when a cumulative volume distribution percentage of the positive active material reaches 50% in a volume-based particle size distribution. When the positive active material satisfies the above formula, the positive active material has good structural stability, and the lithium-rich layer structure of the positive active material can maintain a stable layered structure in the charge and discharge process, inhibit the inter-layer migration of Ni, and reduce oxygen release, thereby improving the cycle performance and safety performance of the battery.

In any embodiment, the Dv50 of the positive active material is 5 to 15 µm, optionally 8 to 10 µm. When the Dv50 of the positive active material is within the above range, the positive active material has good structural stability, and the lithium-rich layer structure of the positive active material can maintain a stable layered structure in the charge and discharge process, inhibit the inter-layer migration of Ni, and reduce oxygen release, thereby improving the cycle performance and safety performance of the battery.

In any embodiment, a lithium-nickel mixing degree of the positive active material is ≤5%, optionally ≤3%. The lithium-rich layer structure of the positive active material of the present application effectively reduces the lithium-nickel mixing degree of the positive active material, maintains the stability of the layered structure, and thus improves the cycle performance and safety performance of the battery.

In any embodiment, a weight ratio of the M1 element to the M2 element in the positive active material is 1:0.1 to 1:1, optionally 1:0.1 to 1:0.5. When the weight ratio of the M1 element to the M2 element in the positive active material satisfies the above range, the structural stability of the material can be improved, thereby improving the cycle performance and safety performance of the battery.

In any embodiment, the positive active material further has a coating, and a chemical formula of the coating is LiₑCoO₂, where 0 < e ≤ 1. The coating LiₑCoO₂ can effectively prevent the electrolyte solution from having side reactions on the surface of the positive active material, reduce oxygen release, and further improve the cycle performance and safety performance of the battery.

In any embodiment, the coating has a thickness of 0.01 to 0.2 µm, optionally 0.05 to 0.1 µm. When the coating has a thickness within the above range, it can effectively prevent the electrolyte solution from having side reactions on the surface of the positive active material, thereby further improving the cycle performance and safety performance of the battery.

In any embodiment, a weight ratio of the coating to the positive active material is (0.002 to 0.02):1, optionally (0.005-0.012):1. When the weight ratio of the coating to the positive active material satisfies the above range, the cycle performance and safety performance of the battery are effectively improved.

In any embodiment, (Dv90-Dv10)/Dv50 of the positive active material is ≥1.1, optionally ≥1.2. When the positive active material satisfies the above range, the filling degree between particles is high, the dispersibility is good, and the energy density of the battery can be effectively improved.

In any embodiment, a compaction density of the positive active material under a pressure of 5000 kg/1.33 cm² is ≥3.4 g/cm³. The positive active material has a high compaction density, which can effectively improve the energy density of the battery.

A second aspect of the present application provides a preparation method for a positive active material, the method includes the following steps:
S1) performing low-temperature co-heating on a precursor of a positive active material and a lithium source to obtain a mixture, mixing the mixture, a compound containing M1 element and a compound containing M2 element, and sintering to obtain a matrix material; and
S2) adding the matrix material obtained in step S1) into an aqueous solution containing a soluble Co-containing compound and a soluble Li-containing compound, washing, filtering, and drying to obtain a positive active material;
where, in the step S1), a low-temperature co-heating temperature is 150 to 400 °C, optionally 200 to 300 °C, time is 1 to 6 h, optionally 2 to 4 h,
a chemical formula of the positive active material is Li₁₊ₐ[NiₓCo_{y}Mn_{z}M1_{b}M2_{c}]O₂, where, 0.05 < a < 0.5, 1/3 ≤ x < 1, 0 ≤ y < 1/3, 0 ≤ z < 1/3, 0 < b < 0.1, 0 < c < 0.1, x + y + z + b + c = 1, M1 is one or more elements selected from Mo, Zr, W, Sb, Nb, Te or Ga, M2 is one or more elements selected from Mg, Al, Ca or Ti, optionally, 0.1 < a < 0.2, 0.6 ≤ x < 1,
the positive active material is in a shape of particles, including a lithium-rich layer extending from a particle surface to an interior of the particle. In a single particle of the positive active material, on a cross section passing through the geometric center of the particle, a ratio of an average Li element content per unit area in the lithium-rich layer to an average Li element content per unit area in the non-lithium-rich layer is (> 1 to 1.5): 1, and optionally (1.05 to 1.2): 1.

Therefore, the positive active material with the lithium-rich layer structure prepared by the above method not only has a high compaction density, which can effectively improve the energy density of the battery, but also has improved structural stability and effectively prevents the electrolyte solution from having side reactions on the surface of the positive active material, thereby improving the cycle performance and safety performance of the battery.

In any embodiment, in the step S1), a molar ratio of Li element in the lithium source to metal element in the precursor of the positive active material is 1.2 to 1.5, optionally 1.25 to 1.4, the metal element is Ni, Co and Mn, a sintering temperature is 600 to 850 °C, sintering time is 9 to 12 h, and a sintering atmosphere is air or oxygen, optionally oxygen. By adjusting the above parameters, the obtained positive active material can have a high compaction density and improved structural stability.

In any embodiment, in the step S1), the compound containing the M1 element is one or more of an oxide, hydroxide, carbonate, oxalate or nitrate containing the M1 element, and an amount of the M1 element added in the step S1) is 2000 to 5000 ppm, optionally 3000 to 4000 ppm, based on a weight of the precursor of the positive active material; and the compound containing the M2 element is one or more of an oxide, hydroxide, carbonate, oxalate or nitrate containing the M2 element, and an amount of the M2 element added in the step S1) is 200 to 2000 ppm, optionally 400 to 1000 ppm, based on the weight of the precursor of the positive active material. By regulating the above parameters, the obtained positive active material can have improved structural stability, thereby improving the cycle performance and safety performance of the battery.

In any embodiment, in the step S2), the soluble Co-containing compound is selected from one or more of Co(CH₃COO)₂, CoC₂O₄, CoSO₄, Co(NO₃)₂ or CoCl₂, and an amount of Co element added in the step S2) is 1000 to 20000 ppm, optionally 5000 to 13000 ppm, based on a weight of the precursor of the positive active material; and the soluble Li-containing compound is selected from one or more of Li₂SO₄, LiNO₃, LiC₂O₄, CH₃COOLi or LiCl, and an amount of Li element added in the step S2) is 500 to 5000 ppm, optionally 1000 to 1500 ppm, based on the weight of the precursor of the positive active material. By adjusting the above parameters, a positive active material with a lithium-rich layer structure can be obtained, thereby improving the cycle performance and safety performance of the battery.

In any embodiment, in the step S2), a water washing temperature is 0 to 100 °C, optionally 5 to 50 °C, and water washing time is 1 to 30 min, optionally 2 to 5 min. By adjusting the above parameters, a positive active material with a lithium-rich layer structure can be obtained, thereby improving the cycle performance and safety performance of the battery.

In any embodiment, in the step S2), the drying is vacuum drying, and a drying temperature is 40 to 120 °C, optionally 80 to 100 °C, and drying time is 6 to 24 h, optionally 12 to 18 h.

In any embodiment, in the step S1), the lithium source is selected from at least one of LiOH·H₂O, Li₂CO₃, Li₂SO₄, LiNO₃, LiC₂O₄ or CH₃COOLi, optionally at least one of LiOH·H₂O, Li₂SO₄ or LiNO₃.

In any embodiment, the method further includes step S3): mixing the positive active material obtained in step S2) with a Co-containing compound and a Li-containing compound, sintering at a temperature of 500 to 800 °C, optionally 550 to 750 °C, for sintering time of 5 to 15 h, optionally 5 to 10 h, and in an air or O₂ sintering atmosphere, to obtain a positive active material with a coating, where a chemical formula of the coating is LiₑCoO₂, where 0 < e ≤ 1. By regulating the above parameters, a coating layer can be formed on the positive active material, effectively preventing the electrolyte solution from having side reactions on the surface of the positive active material, reducing oxygen release, and further improving the cycle performance and safety performance of the battery.

In any embodiment, in the step S3), the Co-containing compound is selected from at least one of Co₃O₄, Co(OH)₂, CoO, CoOOH, Co(CH₃COO)₂, CoC₂O₄ or CoCO₃, Dv50 of particles of the Co-containing compound is 0.001 to 10 µm, optionally 0.001 to 1 µm, and an amount of Co element added in the step S3) is 500 to 20000 ppm, optionally 2000 to 15000 ppm, based on the weight of the precursor of the positive active material; and the Li-containing compound is selected from at least one of LiOH·H₂O, Li₂CO₃, Li₂SO₄, LiNO₃, LiC₂O₄ or CH₃COOLi, Dv50 of particles of the Li-containing compound is 0.001 to 1 µm, optionally 0.01 to 0.05 µm, and an amount of Li element added in the step S3) is 100 to 3000 ppm, optionally 500 to 1500 ppm, based on the weight of the precursor of the positive active material. By adjusting the above parameters, a coating layer can be formed on the positive active material, effectively preventing the electrolyte solution from having side reactions on the surface of the positive active material, reducing oxygen release, and further improving the cycle performance and safety performance of the battery.

A third aspect of the present application provides a secondary battery, including the positive active material of the first aspect of the present application or the positive active material prepared by the method of the second aspect of the present application or a positive electrode plate of the third aspect of the present application.

A fourth aspect of the present application provides an electrical device, including the secondary battery selected from the fourth aspect of the present application.

The electrical device of the present application includes the secondary battery provided by the present application, and thus has at least the same advantages as the secondary battery.

### BRIEF DESCRIPTION OF DRAWINGS

FIG. 1 is a schematic diagram of a secondary battery according to an embodiment of the present application.
FIG. 2 is an exploded view of a secondary battery shown in FIG. 1 according to an embodiment of the present application.
FIG. 3 is a schematic diagram of a battery module according to an embodiment of the present application.
FIG. 4 is a schematic diagram of a battery pack according to an embodiment of the present application.
FIG. 5 is an exploded view of the battery pack shown in FIG. 4 according to an embodiment of the present application.
FIG. 6 is a schematic diagram of an electrical device using a secondary battery as a power supply according to an embodiment of the present application.

Reference numerals in the drawings:
1. battery pack; 2. upper box; 3. lower box; 4. battery module; 5. secondary battery; 51. housing; 52. electrode assembly; 53. top cap assembly.

### DETAILED DESCRIPTION OF EMBODIMENTS

Below, embodiments of a positive active material and a preparation method thereof, a secondary battery, a battery module, a battery pack and an electrical device of the present application are specifically disclosed with appropriate reference to the drawings. However, there are cases where unnecessary detailed descriptions are omitted. For example, there are cases where detailed descriptions of well-known matters and repeated descriptions of actually the same structure are omitted. This is to avoid the following description from becoming unnecessarily lengthy and to facilitate the understanding of those skilled in the art. In addition, the drawings and the following descriptions are provided for those skilled in the art to fully understand the present application and are not intended to limit the subject matters described in the claims.

"Range" disclosed in the present application is limited in the form of lower limit and upper limit, and given range is limited by selecting a lower limit and an upper limit, and the selected lower limit and upper limit define the boundary of a special range. The range limited in this way may include end values or not include end values, and may be combined arbitrarily, that is, any lower limit may be combined with any upper limit to form a range. For example, if the range of 60 to 120 and 80 to 110 is listed for a particular parameter, it is understood that the range of 60 to 110 and 80 to 120 is also expected. In addition, if the minimum range value 1 and 2 are listed, and if the maximum range value 3, 4 and 5 are listed, then the following ranges can be all expected: 1 to 3, 1 to 4, 1 to 5, 2 to 3, 2 to 4 and 2 to 5. In the present application, unless otherwise specified, numerical range "a to b" represents the abbreviation of any real number combination between a and b, where a and b are all real numbers. For example, the numerical range "0 to 5" means that all real numbers between "0 to 5" are listed in this disclosure, and "0 to 5" is just an abbreviation of these numerical combinations. In addition, when a parameter is expressed as an integer ≥ 2, it is equivalent to disclosing that the parameter is, for example, an integer 2, 3, 4, 5, 6, 7, 8, 9, 10, 11, 12, etc.

Unless otherwise expressly specified, any embodiments and optional embodiments in the present application may be combined with each other to form a new technical solution.

Unless otherwise expressly specified, any technical features and optional technical features in the present application may be combined with each other to form a new technical solution.

If not otherwise specified, all steps of the present application may be performed sequentially or randomly, preferably sequentially. For example, the method includes steps (a) and (b), which means that the method may include steps (a) and (b) performed sequentially, or may include steps (b) and (a) performed sequentially. For example, the method may further include step (c), which means that step (c) may be added to the method in any order, for example, the method may include steps (a), (b) and (c), or may include steps (a), (c) and (b), or may include steps (c), (a) and (b), etc.

If not otherwise specified, "include" and "comprise" mentioned in the present application represent open-ended or closed-ended expressions. For example, the "include" and "comprise" may represent that other components not listed may also be included or comprised, or only the listed components may be included or comprised.

If not otherwise specified, in the present application, the term "or" is inclusive. For example, the phrase "A or B" means "A, B, or both A and B ". More specifically, any of the following conditions satisfies the condition "A or B": A is true (or exists) and B is false (or does not exist); A is false (or does not exist) and B is true (or exists); or both A and B are true (or exist).

Layered lithium-rich ternary positive electrode materials have attracted much attention due to their high specific discharge capacity and operating voltage range. However, there are still many problems with lithium-rich ternary positive electrode materials. For example, since the radius of Ni²⁺ (R_{Ni}²⁺ = 0.069 nm) and the radius of Li⁺ (R_{Li}⁺ = 0.076 nm) are very close, Ni²⁺ in a transition metal layer can easily migrate to a lithium layer and occupy the position of Li⁺ in the lithium layer, which hinders the transmission of Li⁺ and makes it impossible for the deintercalated Li⁺ to be intercalated in a lattice, resulting in a decrease in reversible specific capacity and a decrease in coulombic efficiency; during the cycle of the lithium-rich ternary positive electrode materials, part of the transition metal will be transferred to the tetrahedral gap, so the material structure will change to spinel, resulting in voltage decay; and layered lithium-rich ternary positive electrode materials are prone to electrolyte solution decomposition at high cut-off voltages (>4.6V), resulting in poor cycle performance. At present, the electrochemical properties of materials are usually improved by surface coating, ion doping and other means. However, it is still necessary to continuously improve the preparation process and modification methods to enhance the structural stability of the lithium-rich ternary materials, inhibit voltage attenuation, and inhibit side reactions with the electrolyte solution, etc., so as to obtain lithium-rich ternary positive electrode materials with excellent performance.

In view of the above problems, the present application provides a positive active material, characterized in that a chemical formula of the positive active material is Li₁₊ₐ[NiₓCo_{y}Mn_{z}M1_{b}M2_{c}]O₂, where, 0.05 < a < 0.5, 1/3 ≤ x < 1, 0 ≤ y < 1/3, 0 ≤ z < 1/3, 0 < b < 0.1, 0 < c < 0.1, x + y + z + b + c = 1, M1 is one or more elements selected from Mo, Zr, W, Sb, Nb, Te or Ga, M2 is one or more elements selected from Mg, Al, Ca or Ti, optionally, 0.1 < a < 0.2, 0.6 ≤ x < 1,

the positive active material is in a shape of particles, including a lithium-rich layer extending from a particle surface to an interior of the particle. In a single particle of the positive active material, on a cross section passing through the geometric center of the particle, a ratio of an average Li element content per unit area in the lithium-rich layer to an average Li element content per unit area in the non-lithium-rich layer is (> 1 to 1.5):1, and optionally (1.05 to 1.2):1.

Although the mechanism is not clear, the applicant unexpectedly found that: it not only has a high compaction density, which can effectively improve the energy density of the battery, but also has improved structural stability, and effectively prevents the electrolyte solution from having side reactions on the surface of the positive active material, thereby improving the cycle performance and safety performance of the battery. Specifically, on the one hand, the positive active material has a lithium-rich layer structure, which can maintain a stable layered structure of the positive active material in the charge and discharge process, promote Ni to migrate within the layer, and effectively reduce the lithium-nickel mixing degree, and at the same time, the vacancy clusters formed by the migration of Ni can fix the activated lattice oxygen and reduce oxygen release, thereby improving the cycle performance and safety performance of the battery. On the other hand, the M1 and M2 elements doped in the positive active material can stabilize the lattice structure, and effectively improve the structural stability of the positive active material, thereby further improving the cycle performance and safety performance of the battery.

In some embodiments, a ratio of an average Li element content per unit area in the lithium-rich layer to an average Li element content per unit area in a non-lithium-rich layer is, for example, at least 1.01:1, at least 1.05:1, at least 1.1:1, at least 1.18:1, at least 1.2:1, at least 1.3:1, at least 1.4:1 or at least 1.5:1. In the present application, the Li content and distribution change in the positive active material can be obtained by using the technology commonly used to detect the Li content known in the art, for example, using the PHI NanoTOFII time-of-flight secondary mass spectrometer of Ulvac-Phi Company of Japan to obtain the Li content and distribution change in the material.

In some embodiments, the positive active material satisfies: k = 2t/Dv50, and k is greater than 0 to 0.6, optionally 0.01 to 0.3, where t is a thickness of the lithium-rich layer extending from the particle surface to the interior of the particle of the positive active material, and the Dv50 is a corresponding particle diameter when the cumulative volume distribution percentage of the positive active material reaches 50% in a volume-based particle size distribution. When the positive active material satisfies the above formula, the positive active material has good structural stability, and the lithium-rich layer structure of the positive active material can maintain a stable layered structure in the charge and discharge process, inhibit the inter-layer migration of Ni, and reduce oxygen release, thereby improving the cycle performance and safety performance of the battery. In other embodiments, the k is, for example, greater than 0.001, greater than 0.01, greater than 0.08, greater than 0.1, greater than 0.2, greater than 0.3, greater than 0.4, greater than 0.5 or greater than 0.6.

In the present application, the thickness t of the lithium-rich layer extending from the particle surface to the interior of the particle of the positive active material is, for example, greater than 0.00475 µm, greater than 0.0475 µm, greater than 0.38 µm, greater than 0.95 µm, greater than 1.425 µm, greater than 1.9 µm or greater than 2.85 µm.

In some embodiments, the Dv50 of the positive active material is 5 to 15 µm, optionally 8 to 10 µm. When the Dv50 of the positive active material is within the above range, the positive active material has good structural stability, and the lithium-rich layer structure of the positive active material can maintain a stable layered structure in the charge and discharge process, inhibit the inter-layer migration of Ni, and reduce oxygen release, thereby improving the cycle performance and safety performance of the battery.

In some embodiments, a lithium-nickel mixing degree of the positive active material is ≤5%, optionally ≤3%. In other embodiments, the lithium-nickel mixing degree of the positive active material is, for example, ≤5%, ≤4%, ≤3.5%, ≤3%, ≤2.5%, ≤2%, ≤1.5% or ≤1%. Since the radius of Ni²⁺ is very close to that of Li⁺, Ni²⁺ in the transition metal layer can easily migrate to the lithium layer and occupy the site of lithium, causing cation mixing (i.e., lithium-nickel mixing), resulting in poor structural stability of the positive active material. The performance of the positive active material decreases as the degree of cation mixing increases. However, the lithium-rich layer structure of the positive active material of the present application can promote intra-layer migration of Ni and inhibit its inter-layer migration, effectively reduce the lithium-nickel mixing degree, and maintain the stability of the layered structure, and at the same time, the vacancy clusters formed by Ni migration can fix the activated lattice oxygen and reduce oxygen release, thereby improving the cycle performance and safety performance of the battery.

In the present application, the D8 Advance X-ray diffractometer (XRD) of Bruker Corporation of Germany can be used to obtain the XRD spectrum of the positive active material, and the lithium-nickel mixing degree value of the positive active material can be obtained through open-source software (i.e., GSAS software).

In some embodiments, a weight ratio of the M1 element to the M2 element in the positive active material is 1:0.1 to 1:1, optionally 1:0.1 to 1:0.5. When the weight ratio of the M1 element to the M2 element in the positive active material satisfies the above range, the structural stability of the material can be improved, thereby improving the cycle performance and safety performance of the battery. In the present application, the amount of the M1 element and the M2 element is measured by a detection technique commonly used to measure the content of doping elements known in the art, such as inductively coupled plasma emission spectroscopy (ICP).

In some embodiments, the positive active material further has a coating, and the chemical formula of which is LiₑCoO₂, where 0 < e ≤ 1. The coating LiₑCoO₂ can effectively prevent the electrolyte solution from having side reactions on the surface of the positive active material, reduce oxygen release, and further improve the cycle performance and safety performance of the battery.

In some embodiments, the coating has a thickness of 0.01 to 0.2 µm, optionally 0.05 to 0.1 µm. When the coating has a thickness within the above range, it can effectively prevent the electrolyte solution from having side reactions on the surface of the positive active material, thereby further improving the cycle performance and safety performance of the battery.

In some embodiments, a weight ratio of the coating to the positive active material is (0.002 to 0.02):1, optionally (0.005 to 0.012):1. When the weight ratio of the coating to the positive active material satisfies the above range, the cycle performance and safety performance of the battery are effectively improved.

In some embodiments, (Dv90-Dv10)/Dv50 of the positive active material is ≥1.1, optionally ≥1.2. When the positive active material satisfies the above range, the filling degree between particles is high, the dispersibility is good, and the energy density of the battery can be effectively improved.

In the present application, the Dv10, Dv50 and Dv90 are the particle diameters of the positive active material measured by volume-based particle size distribution, where the Dv10 is the corresponding particle diameter when the cumulative volume percentage of the sample reaches 10%, the Dv50 is the corresponding particle diameter when the cumulative volume percentage of the sample reaches 50%, and the Dv90 is the corresponding particle diameter when the cumulative volume percentage of the sample reaches 90% in a volume-based particle size distribution.

In some embodiments, a compaction density of the positive active material under a pressure of 5000 kg/1.33 cm² is ≥3.4 g/cm^{3.} The positive active material has a high compaction density and can effectively improve the energy density of the battery. The compaction density can be measured according to GB/T 24533-2009.

A second aspect of the present application provides a preparation method for a positive active material, the method includes the following steps:
S1) performing low-temperature co-heating on a precursor of the positive active material and a lithium source to obtain a mixture, and mixing and sintering the mixture, a compound containing the M1 element, and a compound containing the M2 element to obtain a matrix material; and
S2) adding the matrix material obtained in the step S1) into an aqueous solution containing a soluble Co-containing compound and a soluble Li-containing compound, washing with water, filtering, and drying to obtain a positive active material;
where, in the step S1), a low-temperature co-heating temperature is 150 to 400 °C, optionally 200 to 300 °C, time is 1 to 6 h, optionally 2 to 4 h,
a chemical formula of the positive active material is Li₁₊ₐ[NiₓCo_{y}Mn_{z}M1_{b}M2_{c}]O₂, where, 0.05 < a < 0.5, 1/3 ≤ x < 1, 0 ≤ y < 1/3, 0 ≤ z < 1/3, 0 < b < 0.1, 0 < c < 0.1, x + y + z + b + c = 1, M1 is one or more elements selected from Mo, Zr, W, Sb, Nb, Te or Ga, M2 is one or more elements selected from Mg, Al, Ca or Ti, optionally, 0.1 < a < 0.2, 0.6 ≤ x < 1,
the positive active material is in a shape of particles, including a lithium-rich layer extending from a particle surface to an interior of the particle. In a single particle of the positive active material, on a cross section passing through the geometric center of the particle, a ratio of an average Li element content per unit area in the lithium-rich layer to an average Li element content per unit area in the non-lithium-rich layer is (> 1 to 1.5): 1, and optionally (1.05 to 1.2): 1.

Therefore, the positive active material with the lithium-rich layer structure prepared by the above method not only has a high compaction density, which can effectively improve the energy density of the battery, but also has improved structural stability and effectively prevents the electrolyte solution from having side reactions on the surface of the positive active material, thereby improving the cycle performance and safety performance of the battery.

In the present application, the precursor of the positive active material may be prepared by a method known in the prior art, such as a hydroxide co-precipitation method, for example, by the method recorded in CN 111384372 A. More specifically, the precursor of the first positive active material A may include but is not limited to Ni_{0.8}Co_{0.1}Mn_{0.1}(OH)₂, Ni_{0.9}Co_{0.05}Mn_{0.05}(OH)₂, Ni_{0.7}Co_{0.1}Mn_{0.2}(OH)₂, Ni_{0.96}Co_{0.03}Mn_{0.01}(OH)₂, and Ni_{0.75}Co_{0.1}Mn_{0.15}(OH)₂. The precursor of the second positive active material B may include but is not limited to Ni_{0.8}Co_{0.1}Mn_{0.1}(OH)₂, Ni_{0.9}Co_{0.05}Mn_{0.05}(OH)₂, Ni_{0.7}Co_{0.1}Mn_{0.2}(OH)₂, Ni_{0.96}Co_{0.03}Mn_{0.01}(OH)₂ and Ni_{0.75}Co_{0.1}Mn_{0.15}(OH)₂.

In some embodiments, in the step S1), a low-temperature co-heating temperature is, for example, 200 to 250 °C.

In some embodiments, in the step S1), a molar ratio of the Li element in the lithium source to the metal element in the precursor of the positive active material is 1.2 to 1.5, optionally 1.25 to 1.4, the metal element is Ni, Co and Mn, a sintering temperature is 600 to 850 °C, sintering time is 9 to 12 h, and a sintering atmosphere is air or oxygen, optionally oxygen. The molar ratio of the Li element to the metal element in the precursor, the sintering temperature and the sintering time can make the obtained positive active material have a high compaction density and improved structural stability.

In some embodiments, in the step S1), the compound containing the M1 element is one or more of oxide, hydroxide, carbonate, oxalate or nitrate containing the M1 element, and an amount of the M1 element added in the step S1) is 2000 to 5000 ppm, optionally 3000 to 4000 ppm, based on the weight of the precursor of the positive active material; and the compound containing the M2 element is one or more of oxide, hydroxide, carbonate, oxalate or nitrate containing the M2 element, and an amount of the M2 element added in the step S1) is 200 to 2000 ppm, optionally 400 to 1000 ppm, based on the weight of the precursor of the positive active material. By selecting the sources of the M1 element and the M2 element and regulating their respective contents, the obtained positive active material can have improved structural stability, thereby improving the cycle performance and safety performance of the battery.

In some embodiments, in the step S2), the soluble Co-containing compound is selected from one or more of Co(CH₃COO)₂, CoC₂O₄, CoSO₄, Co(NO₃)₂ or CoCl₂, and an amount of Co element added in the step S2) is 1000 to 20000 ppm, optionally 5000 to 13000 ppm, based on the weight of the precursor of the positive active material; and the soluble Li-containing compound is selected from one or more of Li₂SO₄, LiNO₃, LiC₂O₄, CH₃COOLi or LiCl, and an amount of Li element added in the step S2) is 500 to 5000 ppm, optionally 1000 to 1500 ppm, based on the weight of the precursor of the positive active material. By selecting the soluble Co-containing compound and regulating the amount of the added Co element, and by selecting the soluble Li-containing compound and regulating the amount of the added Li element, a positive active material having a lithium-rich layer structure can be obtained, thereby improving the cycle performance and safety performance of the battery.

In some embodiments, in the step S2), a water washing temperature is 0 to 100 °C, optionally 5 to 50 °C, and further optionally 10 to 30 °C, and water washing time is 1 to 30 min, optionally 2 to 5 min. By adjusting the water washing temperature and time in the step S2), a positive active material with a lithium-rich layer structure can be obtained, thereby improving the cycle performance and safety performance of the battery.

In some embodiments, in the step S2), the drying is vacuum drying, and a drying temperature is 40 to 120 °C, optionally 80 to 100 °C, and drying time is 6 to 24 h, optionally 12 to 18 h.

In some embodiments, in the step S1), the lithium source is selected from at least one of LiOH·H₂O, Li₂CO₃, Li₂SO₄, LiNO₃, LiC₂O₄ or CH₃COOLi, optionally at least one of LiOH·H₂O, Li₂SO₄ or LiNO₃.

In some embodiments, the method further includes step S3): mixing the positive active material obtained in the step S2) with a Co-containing compound and a Li-containing compound, sintering at a temperature of 500 to 800 °C, optionally 550 to 750 °C, for sintering time of 5 to 15 h, optionally 5 to 10 h, and in an air or O₂ sintering atmosphere, to obtain a positive active material having a coating, where the chemical formula of the coating is LiₑCoO₂, where 0 < e ≤ 1. By adding the Co-containing compound and the Li-containing compound, a coating layer can be formed on the positive active material, and the coating layer can effectively prevent the electrolyte solution from having side reactions on the surface of the positive active material, reduce oxygen release, and thus further improve the cycle performance and safety performance of the battery.

**In** some embodiments, in the step S3), the Co-containing compound is selected from at least one of Co₃O₄, Co(OH)₂, CoO, CoOOH, Co(CH₃COO)₂, CoC₂O₄ or CoCO₃, the Dv50 of particles of the Co-containing compound is 0.001 to 10 µm, optionally 0.001 to 1 µm, and an amount of the Co element added in the step S3) is 500 to 20000 ppm, optionally 2000 to 15000 ppm, based on the weight of the precursor of the positive active material; and the Li-containing compound is selected from at least one of LiOH·H₂O, Li₂CO₃, Li₂SO₄, LiNO₃, LiC₂O₄ or CH₃COOLi, the Dv50 of particles of the Li-containing compound is 0.001 to 1 µm, optionally 0.01 to 0.05 µm, and an amount of Li element added in the step S3) is 100 to 3000 ppm, optionally 500 to 1500 ppm, based on the weight of the precursor of the positive active material. By adjusting the above parameters, a coating layer can be formed on the positive active material, effectively prevent the electrolyte solution from having side reactions on the surface of the positive active material, reduce oxygen release, and further improve the cycle performance and safety performance of the battery.

A third aspect of the present application provides a positive electrode plate, which includes a positive current collector and a positive film layer arranged on at least one surface of the positive current collector, the positive film layer includes the positive active material of the first aspect of the present application or the positive active material prepared by the method of the second aspect of the present application, and a content of the positive active material in the positive film layer is more than 10 wt%, based on the total weight of the positive electrode film layer.

A fourth aspect of the present application provides a secondary battery, which includes the positive active material of the first aspect of the present application or the positive active material prepared by the method of the second aspect of the present application or the positive electrode plate of the third aspect of the present application.

A fifth aspect of the present application provides an electrical device, which includes the secondary battery selected from the fourth aspect of the present application.

**In** the present application, the secondary battery may be in the form of a battery cell, a battery module, or a battery pack. The battery module and the battery pack may include a battery cell, and the battery pack may also include a battery module.

In some embodiments, battery cells may be assembled into a battery module. In some embodiments, the battery cells may be assembled into a battery pack. In some embodiments, battery modules may be assembled into a battery pack.

In addition, the secondary battery (in the form of a battery cell), a battery module, a battery pack, and an electrical device of the present application are described below with due reference to the drawings.

In an embodiment of the present application, provided is a secondary battery.

Typically, the secondary battery includes a positive electrode plate, a negative electrode plate, an electrolyte and a separator. In the charge and discharge process of the battery, active ions are intercalated and de-intercalated back and forth between the positive electrode plate and the negative electrode plate. The electrolyte plays the role of conducting ions between the positive electrode plate and the negative electrode plate. The separator is arranged between the positive electrode plate and the negative electrode plate, mainly to prevent the positive and negative electrodes from short-circuiting, and allow ions to pass through. In the present application, the filling rate of the battery is 90% to 95%.

### [Positive electrode plate]

The positive electrode plate includes a positive current collector and a positive film layer disposed on at least one surface of the positive current collector, and the positive film layer includes a positive active material according to the first aspect of the present application.

As an example, the positive current collector is provided with two opposite surfaces in a thickness direction of the positive current collector, and the positive film layer is disposed on either or both of the two opposite surfaces of the positive current collector.

In some embodiments, the positive current collector may be metal foil or a composite current collector. For example, as the metal foil, aluminum foil may be used. The composite current collector may include a polymer material base layer and a metal layer formed on at least one surface of the polymer material base layer. The composite current collector may be formed by forming a metal material (aluminum, aluminum alloy, nickel, nickel alloy, titanium, titanium alloy, silver and silver alloy, etc.) on a polymer material substrate (such as a substrate of polypropylene (PP), polyethylene terephthalate (PET), polybutylene terephthalate (PBT), polystyrene (PS), polyethylene (PE), etc.).

In some embodiments, the positive active material may be the positive active material of the first aspect of the present application. The weight ratio of the positive active material in the positive film layer is 80 to 100 wt%, based on the total weight of the positive electrode film layer.

In some embodiments, the positive film layer may also optionally include a binder. As an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and fluorine-containing acrylate resin. The weight ratio of the binder in the positive film layer is 0 to 20 wt%, based on the total weight of the positive electrode film layer.

In some embodiments, the positive film layer may further optionally include a conductive agent. As an example, the conductive agent may include at least one of superconducting carbon, acetylene black, carbon black, Ketjen black, carbon dots, carbon nanotubes, graphene or carbon nanofibers. The weight ratio of the conductive agent in the positive film layer is 0 wt% to 20 wt%, based on the total weight of the positive electrode film layer.

In some embodiments, the positive electrode plate may be prepared by the following method: the foregoing components for preparing the positive electrode plate, such as the positive active material, the conductive agent, the binder and any other components are dispersed in a solvent (such as N-methyl-pyrrolidone) to form a positive electrode slurry, where the positive electrode slurry has a solid content of 40 wt% to 80 wt%, and the viscosity at room temperature is adjusted to 5000 to 25000 mPa•s; and the positive current collector is coated with the positive electrode slurry, and after drying, cold pressing and other processes, the positive electrode plate can be obtained, where a coating areal density of the positive electrode powder per unit area is 150 to 350 mg/m², and the compaction density of the positive electrode plate is 3.0 to 3.6 g/cm³, optionally 3.3 to 3.5 g/cm³. The calculation formula of the compaction density is:
Compaction density = coated surface density / (squeezed electrode plate thickness - current collector thickness).

### [Negative electrode plate]

The negative electrode plate includes a negative current collector and a negative film layer disposed on at least one surface of the negative current collector, and the negative film layer includes a negative active material.

As an example, the negative current collector is provided with two opposite surfaces in a thickness direction of the negative current collector, and the negative film layer is disposed on either or both of the two opposite surfaces of the negative current collector.

In some embodiments, the negative current collector may be metal foil or a composite current collector. For example, as the metal foil, copper foil may be used. The composite current collector may include a polymer material base layer and a metal layer formed on at least one surface of the polymer material substrate. The composite current collector may be formed by forming a metal material (copper, copper alloy, nickel, nickel alloy, titanium, titanium alloy, silver and silver alloy, etc.) on a polymer material substrate (such as a substrate of polypropylene (PP), polyethylene terephthalate (PET), polybutylene terephthalate (PBT), polystyrene (PS), polyethylene (PE), etc.).

In some embodiments, the negative active material may be a negative active material for a battery known in the art. As an example, the negative active material may include at least one of the following materials: artificial graphite, natural graphite, soft carbon, hard carbon, silicon-based material, tin-based material, lithium titanate, etc. The silicon-based material may be selected from at least one of elemental silicon, silicon oxide compounds, silicon-carbon composites, silicon-nitrogen composites, or silicon alloys. The tin-based material may be selected from at least one of elemental tin, tin oxide compounds, or tin alloys. However, the present application is not limited to these materials, and other traditional materials that can be used as negative active materials for batteries may also be used. These negative active materials may be used alone or in combination of two or more. The negative active material may have an average particle size (D₁₀) of 1 µm to 15 µm, preferably 4 µm to 9 µm, an average particle size (D₅₀) of 12 µm to 22 µm, preferably 14 µm to 17 µm, and an average particle size (D₉₀) of 26 µm to 40 µm, preferably 30 µm to 37 µm. D₁₀ is the corresponding particle diameter when the cumulative volume distribution percentage of the sample reaches 10%; D₅₀ is the corresponding particle diameter when the cumulative volume distribution percentage of the sample reaches 50%; and D₉₀ is the corresponding particle diameter when the cumulative volume distribution percentage of the sample reaches 90% in a volume-based particle size distribution. The weight ratio of the negative active material in the negative film layer is 70 to 100 wt%, based on the total weight of the negative electrode film layer.

In some embodiments, the negative film layer may further optionally include a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA) or carboxymethyl chitosan (CMCS). The weight ratio of the binder in the negative film layer is 0 to 30 wt%, based on the total weight of the negative electrode film layer.

In some embodiments, the negative film layer may further optionally include a conductive agent. The conductive agent may be selected from at least one of superconducting carbon, acetylene black, carbon black, Ketjen black, carbon dots, carbon nanotubes, graphene or carbon nanofibers. The weight ratio of the conductive agent in the negative film layer is 0 to 20 wt%, based on the total weight of the negative electrode film layer.

In some embodiments, the negative film layer may further include other additives, such as a thickener (such as sodium carboxymethyl cellulose (CMC-Na)), etc. The weight ratio of the other additives in the negative film layer is 0 to 15 wt%, based on the total weight of the negative electrode film layer.

In some embodiments, the negative electrode plate may be prepared by the following method: the components for preparing the negative electrode plate, such as the negative active material, the conductive agent, the binder and any other components are dispersed in a solvent (such as deionized water) to form a negative electrode slurry, where the solid content of the negative electrode slurry is 30 to 70 wt%, and the viscosity at room temperature is adjusted to 2000 to 10000 mPa•s; and the negative current collector is coated with the negative electrode slurry, and after drying, cold pressing and other processes, the negative electrode plate can be obtained. The negative electrode powder coating unit area density is 75 to 220 mg/m², and the compaction density of the negative electrode plate is 1.2 to 2.0 g/m³.

### [Electrolyte]

The electrolyte plays the role of conducting ions between the positive electrode plate and the negative electrode plate. The present application has no specific limitation on the type of electrolyte, which can be selected according to needs. For example, the electrolyte may be in a liquid state, gel state or solid state.

In some embodiments, the electrolyte is an electrolyte solution, which includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato) borate, lithium bis(oxalato)borate, lithium difluoro(bisoxalato)phosphate, or lithium tetrafluoro(oxalato)phosphate. The concentration of the electrolyte salt is typically 0.5 to 5 mol/L.

In some embodiments, the solvent may be at least one selected from ethylene carbonate, propylene carbonate, ethyl methyl carbonate, diethyl carbonate, dimethyl carbonate, dipropyl carbonate, methyl propyl carbonate, ethylene propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methyl sulfone, or (ethylsulfonyl)ethane.

In some embodiments, the electrolyte solution may further optionally include additives. For example, the additive may include a negative film-forming additive and a positive film-forming additive. The additive may further include an additive capable of improving specified performance of the battery, for example, an additive for improving overcharge performance of the battery, or an additive for improving high-temperature or low-temperature performance of the battery, etc.

### [Separator]

In some embodiments, the secondary battery further includes a separator. The present application has no particular limitation on the type of separator, and any known porous separator with good chemical stability and mechanical stability can be selected.

In some embodiments, the material of the separator may be selected from at least one of glass fiber, non-woven fabric, polyethylene, polypropylene or polyvinylidene difluoride. The separator may be a single-layer film or a multi-layer composite film, without particular limitation. When the separator is a multi-layer composite film, the materials of each layer may be the same or different, without particular limitation.

In some embodiments, the separator has a thickness of 6 to 40 µm, optionally 12 to 20 µm.

In some embodiments, the positive electrode plate, the negative electrode plate and the separator may be made into an electrode assembly through a winding process or a stacking process.

In some embodiments, the secondary battery may include an outer package, which may be used to encapsulate an electrode assembly and the electrolyte described above.

In some embodiments, the outer package of the secondary battery may be a hard housing, such as a hard plastic housing, an aluminum housing, a steel housing, etc. The outer package of the secondary battery may also be a soft package, such as a bag-type soft package. The material of the soft package may be plastic, and examples of the plastic include polypropylene, polybutylene terephthalate, and polybutylene succinate.

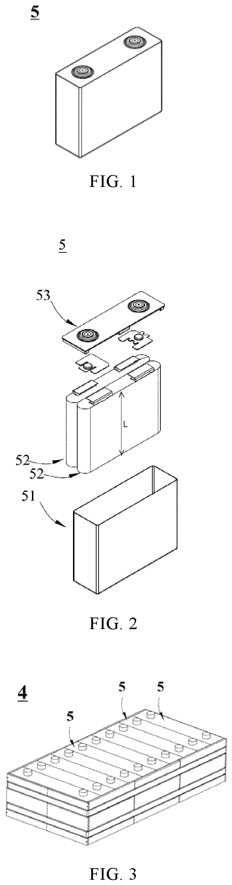

The present application has no particular limitation on the shape of the secondary battery, which may be cylindrical, prismatic or any other shape. For example, FIG. 1 is a secondary battery 5 of a prismatic structure as an example.

In some embodiments, referring to FIG. 2, the outer package may include a housing 51 and a cover plate 53, where the housing 51 may include a bottom plate and a side plate connected to the bottom plate, and the bottom plate and the side plate enclose an accommodation cavity. The housing 51 has an opening communicating to the accommodation cavity, and the cover plate 53 can cover the opening to close the accommodation cavity. The positive electrode plate, the negative electrode plate and the separator can form an electrode assembly 52 through a winding process or a lamination process. The electrode assembly 52 is encapsulated in the accommodation cavity. The electrolyte solution is infiltrated in the electrode assembly 52. The number of electrode assemblies 52 contained in the secondary battery 5 may be one or more, and a person skilled in the art can select according to specific actual needs.

In some embodiments, the secondary battery may be assembled into a battery module, there may be one or more secondary batteries in the battery module, and the specific number may be selected by a person skilled in the art according to the application and capacity of the battery module.

FIG. 3 is a battery module 4 as an example. Referring to FIG. 3, in the battery module 4, a plurality of secondary batteries 5 may be arranged in sequence along the length direction of the battery module 4. Of course, they may also be arranged in any other manner. Further, the plurality of secondary batteries 5 may be fixed by fasteners.

Optionally, the battery module 4 may further include a housing with an accommodating space, and the plurality of secondary batteries 5 are accommodated in the accommodating space.

In some embodiments, the foregoing battery module may further be assembled into a battery pack, there may be one or more battery modules in the battery pack, and the specific number may be selected by a person skilled in the art according to the application and capacity of the battery pack.

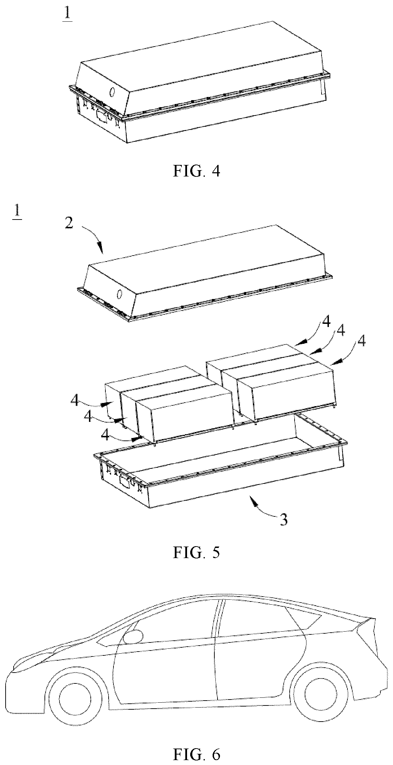

FIG. 4 and FIG. 5 are battery packs 1 as an example. Referring to FIG. 4 and FIG. 5, the battery pack 1 may include a battery box and a plurality of battery modules 4 disposed in the battery box. The battery box includes an upper box body 2 and a lower box body 3, and the upper box body 2 can cover the lower box body 3 and form a closed space for accommodating the battery modules 4. The plurality of battery modules 4 may be arranged in the battery box in any manner.

In addition, the present application further provides an electrical device, which includes at least one of the secondary battery, battery module, or battery pack provided in the present application. The secondary battery, battery module, or battery pack may be used as a power source for the electrical device, and may also be used as an energy storage unit for the electrical device. The electrical device may include mobile devices (such as mobile phones, laptops, etc.), electric vehicles (such as pure electric vehicles, hybrid electric vehicles, plug-in hybrid electric vehicles, electric bicycles, electric scooters, electric golf carts, electric trucks, etc.), electric trains, ships and satellites, energy storage systems, etc., but is not limited to these.

As the electrical device, the secondary battery, the battery module or the battery pack may be selected according to the use needs of the electrical device.

FIG. 6 is an electrical device as an example. The electrical device is a pure electric vehicle, a hybrid electric vehicle, or a plug-in hybrid electric vehicle, etc. In order to meet the electrical device's requirements for high power and high energy density of secondary batteries, a battery pack or a battery module may be used.

As another example, the device may be a mobile phone, a tablet computer, a laptop, etc. Such a device is usually required to be light and thin, and a secondary battery may be used as a power source.

### Embodiment

Hereinafter, the embodiments of the present application will be described. The embodiments described below are exemplary and are only used to explain the present application, and should not be construed as limiting the present application. If no specific technique or condition is indicated in the embodiments, the techniques or conditions described in the literature in this field or the product specifications are used. The reagents or instruments used that do not indicate the manufacturer are all conventional products that can be obtained commercially.

### PREPARATION OF SECONDARY BATTERY

### Embodiment 1

### 1. Preparation of positive active material

### 1) Preparation of precursor of positive active material

Preparing nickel sulfate, cobalt sulfate and manganese sulfate into a 2 mol/L metal salt solution in a molar ratio of 9:0.5:0.5, and then continuously adding the metal salt solution, 8 mol/L ammonia water and 5 mol/L NaOH solution into a reactor for reaction. Preparing the precursor of the positive active material (Ni_{0.9}Co_{0.05}Mn_{0.05}(OH)₂) by a hydroxide co-precipitation method by controlling the pH value of the reaction to 11.30, the ammonia concentration to 4.0 g/L, the reaction time to 20 h and the stirring rate to 300 r/min, with a particle diameter Dv50 of 9.5 µm.

### 2) Preparation of positive active material

S1) Subjecting the lithium hydroxide and the prepared precursor of the positive active material to low-temperature co-heating at 250 °C for 3 h at a molar ratio of Li/Me (Me is the total molar amount of Ni, Co and Mn) of 1.3:1 to obtain a mixture, and mixing the mixture with niobium pentoxide (Nb₂O₅) and aluminum oxide (Al₂O₃) in a plow mixer to be uniformly mixed, where the molar ratio of the lithium hydroxide, the precursor of the positive active material, Nb₂O₅ and Al₂O₃ is 1.3:1:0.0020:0.0036, and then placing the materials in a kiln for sintering at a sintering temperature of 780 °C, sintering time of 12 h, and a sintering atmosphere of oxygen. After cooling, a matrix material is obtained.

S2) Adding the matrix material obtained above to an aqueous solution containing cobalt acetate ((CH₃COO)₂Co) and lithium acetate (CH₃COOLi), where the amount of Co element is 5000 ppm and the amount of Li element is 1000 ppm. Washing the mixture with water at 10 °C for 3 min, filtering, and then drying in a vacuum drying oven at 105 °C for 24 h. After cooling, obtaining the positive active material Li_{1.15}Ni_{0.8950}Co_{0.0497}Mn_{0.0497}Nb_{0.002}Al_{0.0036}O₂ by mechanical crushing, with a particle diameter Dv50 of 9.5 µm.

### 2. Preparation of button battery

[Positive electrode plate] The positive active material obtained above, polyvinylidene difluoride (PVDF), and acetylene black are added to N-methyl-pyrrolidone (NMP) at a weight ratio of 90:5:5, and stirred in a drying room to form a slurry. The aluminum foil is coated with the slurry, and drying and cold pressing are performed to form a positive electrode plate. The coating amount is 0.01 g/cm², and the compaction density is 3.5 g/ cm³.

[Negative electrode plate] A 0.5 mm lithium metal sheet is used as a negative electrode plate.

[Electrolyte solution] Ethylene carbonate (EC), ethyl methyl carbonate (EMC), and diethyl carbonate (DEC) are mixed in a volume ratio of 1:1:1, and then LiPF₆ is uniformly dissolved in the above solution to obtain an electrolyte solution, where the concentration of LiPF₆ is 1 mol/L.

### [Separator]

The separator is Cellgard 2400 purchased from Cellgard.

The positive electrode plate, negative electrode plate, separator and electrolyte solution prepared above are assembled into a CR2032 button battery (hereinafter referred to as "button cell") in a button cell box.

### 3. Preparation of full battery

[Positive electrode plate] The positive active material obtained above is mixed with acetylene black and polyvinylidene difluoride (PVDF) in a weight ratio of 94:3: 3 in N-methyl-pyrrolidone (NMP) and then coated on aluminum foil, dried and cold pressed to obtain a positive electrode plate. The coating amount is 0.176 g/cm² and the compaction density is 3.5 g/cm³.

[Negative electrode plate] The negative active material artificial graphite, hard carbon, a conductive agent acetylene black, a binder styrene butadiene rubber (SBR), and a thickener sodium carboxymethyl cellulose (CMC-Na) are mixed uniformly in deionized water at a weight ratio of 90:5:2:2:1, coated on copper foil, dried, and cold pressed to obtain a negative electrode plate. The coating amount is 0.124 g/cm² and the compaction density is 1.6 g/cm³.

[Electrolyte solution] Ethylene carbonate (EC), ethyl methyl carbonate (EMC), and diethyl carbonate (DEC) are mixed in a volume ratio of 1:1:1, and then LiPF₆ is uniformly dissolved in the above solution to obtain an electrolyte solution, where the concentration of LiPF₆ is 1 mol/L.

[Separator] A PE porous polymer film is used as the separator.

The positive electrode plate, separator, and negative electrode plate described above are stacked in order, with the separator placed between the positive and negative electrodes for isolation, and then wound to obtain a bare cell. The bare cell is placed in an outer package, the electrolyte solution is injected, and packaging is performed to obtain a full battery (hereinafter referred to as a "full battery"). The length × width × height of the full battery = 90 mm × 30 mm × 60 mm, and the filling rate of the battery is 91.0%.

### Embodiment 2

Same as Embodiment 1, except that: in the preparation of the positive active material, in step S1), the molar ratio of Li/Me is 1.2:1, and in step S2), the amount of Li element added is 1200 ppm.

### Embodiment 3

Same as Embodiment 1, except that: in the preparation of the positive active material, in step S1), the molar ratio of Li/Me is 1.25:1, and the amount of Li element added in step S2) is 1500 ppm.

### Embodiment 4

Same as Embodiment 1, except that: in the preparation of the positive active material, in step S1), the molar ratio of Li/Me is 1.35:1, and in step S2), the amount of Li element added is 1800 ppm.

### Embodiment 5

Same as Embodiment 1, except that: in the preparation of the positive active material, in step S1), the molar ratio of Li/Me is 1.38:1, and in step S2), the amount of Li element added is 2000 ppm.

### Embodiment 6

Same as Embodiment 1, except that: in the preparation of the positive active material, in step S1), the molar ratio of Li/Me is 1.4:1, and in step S2), the amount of Li element added is 2500 ppm.

### Embodiment 7

Same as Embodiment 1, except that: in the preparation of the positive active material, in step S1), the molar ratio of Li/Me is 1.5:1, and in step S2), the amount of Li element added is 3000 ppm.

### Embodiment 8

Same as Embodiment 1, except that: in the preparation of the positive active material, in step S1), zirconium dioxide (ZrO₂) and magnesium sulfate (MgSO₄) are used, where the amount of Zr element is 2000 ppm and the amount of Mg element is 200 ppm, based on the weight of the precursor of the positive active material; and the molar ratio of lithium hydroxide, the precursor of the positive active material, ZrO₂ to MgSO₄ is 1.3:1:0.0021: 0.0008.

### Embodiment 9

Same as Embodiment 1, except that: in the preparation of the positive active material, in step S1), tungstic acid (H₂WO₄) and titanium dioxide (TiO₂) are used, where the amount of W element is 3000 ppm and the amount of Ti element is 1500 ppm, based on the weight of the precursor of the positive active material; and the molar ratio of lithium hydroxide, the precursor of the positive active material, H₂WO₄, and TiO2 is 1.3:1:0.0016:0.0031.

### Embodiment 10

Same as Embodiment 1, except that: in the preparation of the positive active material, in step S1), molybdenum trioxide (MoO₃) and calcium carbonate (CaCO₃) are used, where the amount of Mo element is 2000 ppm and the amount of Ca element is 2000 ppm, based on the weight of the precursor of the positive active material; and the molar ratio of lithium hydroxide, the precursor of the positive active material, MoO₃, and CaCO₃ is 1.3:1:0.0020:0.0050.

### Embodiment 11

Same as Embodiment 1, except that: in the preparation of the positive active material, in step S1), the low-temperature co-heating temperature is 200 °C.

### Embodiment 12

Same as Embodiment 1, except that: in the preparation of the positive active material, in step S1), the low-temperature co-heating temperature is 400 °C.

### Embodiment 13

Same as Embodiment 1, except that: in the preparation of the positive active material, in step S2), the water washing temperature is 20 °C, and the water washing time is 2 min.

### Embodiment 14

Same as Embodiment 1, except that: in the preparation of the positive active material, in step S2), the water washing temperature is 30 °C, and the water washing time is 1 min.

### Embodiment 15

The positive active material obtained in Embodiment 1 is mixed with CoOOH and CH₃COOLi in a slant mixer at a weight ratio of 1:0.0140:0.0094, where the Dv50 of CoOOH particles was 0.05 µm and the amount of the Co element was 9000 ppm, the Dv50 of CH₃COOLi particles is 0.01 µm and the amount of the Li element was 1000 ppm, and then the materials are placed in a kiln for sintering at a sintering temperature of 600 °C, sintering time of 8 h, and a sintering atmosphere of oxygen. After cooling, the obtained coating is Li_{0.6}CoO₂.

### Embodiment 16

Same as Embodiment 15, except that: the positive active material is mixed with CoOOH and CH₃COOLi in a slant mixer at a weight ratio of 1:0.0023:0.0047, where the amount of Co element is 1500 ppm, and the amount of Li element is 500 ppm.

### Embodiment 17

Same as Embodiment 15, except that: the positive active material is mixed with CoOOH and CH₃COOLi in a slant mixer at a weight ratio of 1:0.0062:0.0094, where the amount of Co element is 4000 ppm, and the amount of Li element is 1000 ppm.

### Embodiment 18

Same as Embodiment 15, except that: the positive active material is mixed with CoOOH and CH₃COOLi in a slant mixer at a weight ratio of 1:0.0163:0.0141, where the amount of Co element is 10500 ppm, and the amount of Li element is 1500 ppm.

### Embodiment 19

Same as Embodiment 15, except that: the positive active material is mixed with CoOOH and CH₃COOLi in a slant mixer at a weight ratio of 1:0.0264:0.0282, wherein the amount of Co element is 17000 ppm, and the amount of Li element is 3000 ppm.

### Comparative Embodiment 1

The precursor of the positive active material is prepared in the same manner as in Embodiment 1.

The molar ratio of lithium hydroxide, the precursor of the positive active material, Nb₂O₅, to Al₂O₃ is 1.05:1:0.0020:0.0036. The materials are then placed in a kiln for sintering at a sintering temperature of 780 °C and sintering time of 12 h in a sintering atmosphere of oxygen. After cooling, the positive active material Li_{1.03}Ni_{0.8950}Co_{0.0497}Mn_{0.0497}Nb_{0.002}Al_{0.0036}O₂ is obtained by mechanical crushing, with a particle diameter Dv50 of 9.5 µm.

### II. Testing of relevant parameters

### (1) Test of particle size

The particle size of the positive active material is determined according to GB/T 19077.1-2016/ISO 13320:2009 (particle size distribution laser diffraction method). A clean beaker is taken, an appropriate amount of the above positive active material is added, an appropriate amount of pure water is added, and the mixture is ultrasonicated at 120 W/5 min to ensure that the material powder is completely dispersed in the water. The solution is poured into an injection tower of a laser particle size analyzer (Malvern Company, model: Mastersizer3000) and then circulated to a test optical path system, the particles are irradiated by the laser beam, and the particle size distribution characteristics of the particles (shading degree: 8% to 12%) can be obtained by receiving and measuring the energy distribution of the scattered light, and the corresponding values of Dv10, Dv50, and Dv90 are read.

The results are shown in Tables 1 and 2.

### (2) Test of Li element content and distribution changes

The obtained positive electrode material is mixed with a conductive resin, and after solidification, the mixture is thinned on an ion thinning instrument (instrument company: Leica, Germany, model: RES102). The thinned sample is placed in a time-of-flight secondary mass spectrometer (instrument company: Ulvac-Phi, Japan, model: PHI NanoTOFII). A primary ion source (Bi source) is used to bombard the cross section of the positive electrode material and excite ions on the cross section of the material. An ion collector is used to collect the ions. The Li element content is collected by calculating the content change at the ion mass M = 6.99 (Li⁺), and the Li element distribution on the cross section of the positive electrode material is observed.

The results are shown in Tables 1 and 2.

### (3) Test of lithium-nickel mixing degree

The obtained positive electrode powder material is fully ground and placed on a groove of an XRD diffractometer slide. The slide is placed in an XRD diffractometer (Instrument Company: Bruker, Germany, Model: D8 Advance), and the positive electrode material is scanned at a scanning speed of 1 °/min to collect the obtained XRD spectrum. The raw data of the XRD spectrum is imported into the GSAS refinement software (open source software), and the XRD spectrum is refined using the Reitveld refinement method, and finally the lithium-nickel mixing degree value is calculated.

The results are shown in Tables 1 and 2.

### (4) Test of compaction density

A certain amount of powder is taken and put in a special compaction mold, then the mold is put on a compaction density instrument. A pressure of 5000 kg (pressurized area is 1.33 cm²) is applied, the thickness of the powder under pressure is read on the device (thickness after pressure relief), and the compaction density is calculated through ρ = m/v.

The results are shown in Tables 1 and 2.

### III. Test of battery performance

### (1) Test of initial gram capacity and initial efficiency of button battery

At 2.8 to 4.3V, the button battery is charged at 0.1 C to 4.3 V, then is charged at a constant voltage of 4.3 V to a current ≤0.05mA, and stands for 2 min, the charging capacity at this time is recorded as C0, then the button battery is discharged at 0.1 C to 2.8 V, and the discharge capacity at this time is the initial gram capacity recorded as D0.

The initial efficiency is calculated according to D0/C0*100%.

See Table 3 for the results.

### (2) Test of initial gram capacity of full battery

At a constant temperature of 25 °C, the full battery stands for 5 min, is discharged to 2.8 V at 1/3 C, stands for 5 min, is charged to 4.25 V at 1/3 C, then is charged at a constant voltage of 4.25 V to a current ≤0.05C, stands for 5 min, and then is discharged to 2.8 V at 1/3 C. The discharge capacity at this time is the initial gram capacity, recorded as D0.

See Table 3 for the results.

### (3) Capacity retention rate of full battery at 25 °C

At 25 °C, the full battery is charged to 4.25 V at a constant current of 1 C, then charged at a constant voltage of 4.25 V until the current drops to 0.05 C, and then discharged to 2.8 V at a constant current of 1 C to obtain the first-cycle specific discharge capacity (C_{dl}); the charge and discharge is repeated until the 300th cycle, and the specific discharge capacity of the lithium-ion battery after n cycles is recorded as C_{dn}. Capacity retention rate = specific discharge capacity after n cycles (C_{dn})/first-cycle specific discharge capacity (C_{dl}).

See Table 3 for the results.

### (4) Capacity retention rate of full battery at 45 °C

At 45 °C, the full battery is charged to 4.25 V at a constant current of 1 C, then charged at a constant voltage of 4.25 V until the current drops to 0.05 C, and then discharged to 2.8 V at a constant current of 1 C to obtain the first-cycle specific discharge capacity (C_{dl}); the charge and discharge is repeated until the 300th cycle, and the specific discharge capacity of the lithium-ion battery after n cycles is recorded as C_{dn}. Capacity retention rate = specific discharge capacity after n cycles (C_{dn})/first-cycle specific discharge capacity (C_{dl}).

See Table 3 for the results.

### (5) Test of 70 °C inflation of full battery

At 70 °C, the full battery with 100% state of charge (SOC) is stored. The open circuit voltage (OCV) and AC internal resistance (IMP) of the battery cell are measured before, during and after storage to monitor SOC, and the volume of the battery cell is measured. The full battery after every 48 hours of storage is taken out and stands for 1 hour, then OCV and IMP are tested, and the volume of the battery cell is measured by the water displacement method after cooling to room temperature. The water displacement method is to first measure the gravity F1 of the battery cell separately using a balance that automatically converts units with dial data, and then completely place the battery cell in deionized water (density is known to be 1 g/cm³), and measure the gravity F2 of the battery cell at this time, the buoyant force Fb on the battery cell is F1-F2, and then according to the Archimedes' principle Fb = ρgV_displaced, the battery cell volume V = (F1 - F2)/ρg is calculated.

After each volume test, the battery cell is recharged at a constant current of 1 C to 4.25 V, and then charged at a constant voltage of 4.25 V until the current drops to 0.05 C. After the recharging is completed, the battery cell is put into the furnace to continue testing.

After 30 days of storage, the volume of the battery cell is measured, and the increase in the volume of the battery cell after storage relative to the volume of the battery cell before storage, i.e., the gas production, is calculated.

See Table 3 for the results.

**Table 1 Positive active material composition and related parameters of Embodiments 1 to 14 and Comparative Embodiment 1**

| Embodiment | Chemical formula | Dv50 (µm) | Weight ratio of M1 to M2 | ¹Li-rich/Li-non-rich | Thickness t of lithium-rich layer (µm) | 2t/Dv50 | Lithium-nickel mixing degree (%) | ²SPAN | Compaction density at 5 T (g/cm³) |
|---|---|---|---|---|---|---|---|---|---|
| 1 | Li_{1.15}Ni_{0.8950}Co_{0.0497}Mn_{0.0497}Nb_{0.002}Al_{0.0036}O₂ | 9.5 | 1:0.5 | 1.18:1 | 0.95 | 0.2 | 1.36% | 1.32 | 3.58 |
| 2 | Li_{1.09}Ni_{0.8950}Co_{0.0497}Mn_{0.0497}Nb_{0.002}Al_{0.0036}O₂ | 9.5 | 1:0.5 | 1.01:1 | 0.00475 | 0.001 | 5% | 1.24 | 3.48 |
| 3 | Li_{1.11}Ni_{0.8950}Co_{0.0497}Mn_{0.0497}Nb_{0.002}Al_{0.0036}O₂ | 9.5 | 1:0.5 | 1.05:1 | 0.0475 | 0.01 | 2.17% | 1.19 | 3.51 |
| 4 | Li_{1.19}Ni_{0.8950}Co_{0.0497}Mn_{0.0497}Nb_{0.002}Al_{0.0036}O₂ | 9.5 | 1:0.5 | 1.1:1 | 0.38 | 0.08 | 2.75% | 1.38 | 3.59 |
| 5 | Li_{1.21}Ni_{0.8950}Co_{0.0497}Mn_{0.0497}Nb_{0.002}Al_{0.0036}O₂ | 9.5 | 1:0.5 | 1.2:1 | 1.425 | 0.3 | 3.42% | 1.26 | 3.52 |
| 6 | Li_{1.24}Ni_{0.8950}Co_{0.0497}Mn_{0.0497}Nb_{0.002}Al_{0.0036}O₂ | 9.5 | 1:0.5 | 1.3:1 | 1.9 | 0.4 | 2.89% | 1.2 | 3.61 |
| 7 | Li_{1.3}Ni_{0.8950}Co_{0.0497}Mn_{0.0497}Nb_{0.002}Al_{0.0036}O₂ | 9.5 | 1:0.5 | 1.5:1 | 2.85 | 0.6 | 3% | 1.27 | 3.54 |
| 8 | Li_{1.15}Ni_{0.8973}Co_{0.0499}Mn_{0.0499}Zr_{0.0021}Mg_{0.0008}O₂ | 10 | 1:0.1 | 1.2:1 | 1.05 | 0.21 | 1.76% | 1.34 | 3.55 |
| 9 | Li_{1.09}Ni_{0.8958}Co_{0.0498}Mn_{0.0498}W_{0.0016}Ti_{0.0031}O₂ | 10 | 1:0.5 | 1.22:1 | 1.12 | 0.224 | 1.63% | 1.31 | 3.59 |
| 10 | Li_{1.15}Ni_{0.8936}Co_{0.0497}Mn_{0.0497}Mo_{0.0020}Ca_{0.0050}O₂ | 10 | 1:1 | 1.15:1 | 0.88 | 0.176 | 2.03% | 1.28 | 3.62 |
| 11 | Li_{1.16}Ni_{0.8950}Co_{0.0497}Mn_{0.0497}Nb_{0.002}Al_{0.0036}O₂ | 9.5 | 1:0.5 | 1.17:1 | 0.93 | 0.196 | 1.38% | 1.32 | 3.58 |
| 12 | Li_{1.13}Ni_{0.8950}Co_{0.0497}Mn_{0.0497}Nb_{0.002}Al_{0.0036}O₂ | 9.5 | 1:0.5 | 1.16:1 | 0.92 | 0.194 | 1.42% | 1.34 | 3.60 |
| 13 | Li_{1.14}Ni_{0.8950}Co_{0.0497}Mn_{0.0497}Nb_{0.002}Al_{0.0036}O₂ | 9.5 | 1:0.5 | 1.18:1 | 0.95 | 0.2 | 1.37% | 1.31 | 3.61 |
| 14 | Li_{1.13}Ni_{0.8950}Co_{0.0497}Mn_{0.0497}Nb_{0.002}Al_{0.0036}O₂ | 9.5 | 1:0.5 | 1.17:1 | 0.92 | 0.194 | 1.41% | 1.29 | 3.57 |
| Comparative Embodiment 1 | Li_{1.03}Ni_{0.8950}Co_{0.0497}Mn_{0.0497}Nb_{0.002}Al_{0.0036}O₂ | 9.5 | 1:0.5 | - | 0 | 0 | 6.73% | 1.1 | 3.42 |

| | | | | | | | | | |
|---|---|---|---|---|---|---|---|---|---|
| **[000217]** ¹Ratio of the average Li content per unit area in the lithium-rich layer to the average Li content per unit area in the non-lithium-rich layer [000218] ²SPAN is (Dv90-Dv10)/Dv50 | | | | | | | | | |

**Table 2 Embodiments 15 to 19 Related parameters of positive active materials with coatings**

| Embodiment | Positive active material | Coating | | Weight ratio of coating to positive active material | ²SPAN | Compaction density at 5 T (g/cm³) |
|---|---|---|---|---|---|---|
| | | Chemical formula | Thickness (µm) | | | |
| 15 | Embodiment 1 | Li_{0.6}CoO₂ | 0.08 | 0.01:1 | 1.34 | 3.59 |
| 16 | Embodiment 1 | Li_{0.4}CoO₂ | 0.01 | 0.002:1 | 1.35 | 3.61 |
| 17 | Embodiment 1 | Li_{0.48}CoO₂ | 0.05 | 0.005:1 | 1.35 | 3.62 |
| 18 | Embodiment 1 | Li_{0.75}CoO₂ | 0.1 | 0.012:1 | 1.36 | 3.64 |
| 19 | Embodiment 1 | LiCoO₂ | 0.2 | 0.02:1 | 1.38 | 3.65 |

**Table 3 Performance test results of secondary batteries of Embodiments and Comparative Embodiment**

| Embodiment | 0.1C gram capacity of button battery (mAh/g) | Initial efficiency of button battery (%) | 1/3C gram capacity of full battery (mAh/g) | 300 cycles at 25 °C (%) | 300 cycles at 45 °C (%) | Gas production at 70 °C for 30 days (mL/Ah) |
|---|---|---|---|---|---|---|
| 1 | 227.2 | 93.4% | 215.7 | 94.2% | 89.7% | 16.24 |
| 2 | 227.4 | 93.6% | 215.6 | 91.3% | 86.9% | 19.46 |
| 3 | 226.8 | 93.1% | 215.4 | 92.1% | 87.2% | 17.82 |
| 4 | 226.9 | 93.4% | 215.9 | 92.6% | 87.9% | 16.95 |
| 5 | 227.2 | 92.9% | 215.8 | 92.3% | 87.5% | 17.53 |
| 6 | 227.1 | 93.1% | 215.7 | 91.6% | 87.1% | 18.02 |
| 7 | 226.9 | 92.7% | 215.3 | 91.2% | 86.3% | 19.95 |
| 8 | 227.5 | 92.9% | 215.3 | 93.7% | 88.9% | 16.89 |
| 9 | 226.8 | 92.6% | 215.3 | 93.5% | 89.1% | 17.31 |
| 10 | 227.4 | 93.4% | 215.3 | 93.6% | 88.7% | 16.72 |
| 11 | 227.3 | 92.8% | 214.7 | 93.1% | 88.6% | 17.31 |
| 12 | 227.6 | 92.9% | 214.8 | 92.7% | 87.6% | 19.78 |
| 13 | 227.3 | 92.7% | 214.3 | 92.9% | 88.1% | 18.74 |
| 14 | 227.4 | 92.5% | 214.6 | 92.5% | 87.8% | 18.36 |
| 15 | 227.1 | 93.9% | 217.2 | 94.5% | 90.1% | 16.32 |
| 16 | 227.8 | 94.1% | 216.9 | 93.2% | 87.9% | 17.41 |
| 17 | 227.3 | 93.8% | 216.3 | 93.8% | 88.3% | 17.86 |
| 18 | 227.2 | 93.7% | 216.1 | 94.7% | 90.7% | 16.22 |
| 19 | 226.9 | 93.5% | 215.7 | 92.6% | 87.3% | 16.17 |
| Comparative Embodiment 1 | 226.7 | 92.7% | 215.4 | 85.6% | 81.8% | 30.28 |

From the results in Tables 1 to 3, it can be seen that compared with Comparative Embodiment 1, on the one hand, the positive active material of the present application has a high compaction density, so that the battery has a high energy density; on the other hand, the positive active material of the present application has a lithium-rich layer structure, which can maintain excellent structural stability in the charge and discharge process, effectively reduce the lithium-nickel mixing degree, effectively prevent the electrolyte solution from having side reactions on the surface of the positive active material, reduce oxygen release, and greatly improve the cycle performance and safety performance of the battery. In addition, the formation of the coating LiₑCoO₂ on the surface of the positive active material of the present application can further effectively prevent the electrolyte solution from having side reactions on the surface of the positive active material, thereby further improving the cycle performance and safety performance of the battery.

It should be noted that the present application is not limited to the above-mentioned embodiments. The above-mentioned embodiments are only examples, and the embodiments having the same structure as the technical idea and exerting the same effect within the scope of the technical solution of the present application are all included in the technical scope of the present application. In addition, without departing from the scope of the main purpose of the present application, various modifications that can be thought of by those skilled in the art to the embodiments and other methods of combining some of the constituent elements in the embodiments are also included in the scope of the present application.

## Claims

1. A positive active material, **characterized in that** a chemical formula of the positive active material is Li₁₊ₐ[NiₓCo_{y}Mn_{z}M1_{b}M2_{c}]O₂, wherein, 0.05 < a < 0.5, 1/3 ≤ x < 1, 0 ≤ y < 1/3, 0 ≤ z < 1/3, 0 < b < 0.1, 0 < c < 0.1, x + y + z + b + c = 1, M1 is one or more elements selected from Mo, Zr, W, Sb, Nb, Te or Ga, M2 is one or more elements selected from Mg, Al, Ca or Ti, and optionally, 0.1 < a < 0.2, 0.6 ≤ x < 1,
the positive active material is in a shape of particles, comprising a lithium-rich layer extending from a particle surface to an interior of the particle, in a single particle of the positive active material, on a cross section passing through the geometric center of the particle, a ratio of an average Li element content per unit area in the lithium-rich layer to an average Li element content per unit area in the non-lithium-rich layer is (> 1 to 1.5):1, and optionally (1.05 to 1.2):1.

2. The positive active material according to claim 1, **characterized in that** the positive active material satisfies: k = 2t/Dv50, and k is greater than 0 to 0.6, optionally 0.01 to 0.3, wherein t is a thickness of the lithium-rich layer extending from the particle surface of the positive active material to the interior of the particle, and the Dv50 is a corresponding particle diameter when a cumulative volume distribution percentage of the positive active material reaches 50% in a volume-based particle size distribution.

3. The positive active material according to claim 1 or 2, **characterized in that** the Dv50 of the positive active material is 5 to 15 µm, optionally 8 to 10 µm.

4. The positive active material according to claim 1 or 2, **characterized in that** a lithium-nickel mixing degree of the positive active material is ≤ 5%, optionally ≤ 3%.

5. The positive active material according to claim 1 or 2, **characterized in that** a weight ratio of the M1 element to the M2 element in the positive active material is 1:0.1 to 1:1, optionally 1:0.1 to 1:0.5.

6. The positive active material according to claim 1 or 2, **characterized in that** the positive active material further has a coating, and a chemical formula of the coating is LiₑCoO₂, wherein 0 < e ≤ 1.

7. The positive active material according to claim 6, **characterized in that** a thickness of the coating is 0.01 to 0.2 µm, optionally 0.05 to 0.1 µm.

8. The positive active material according to claim 6, **characterized in that** a weight ratio of the coating to the positive active material is (0.002 to 0.02):1, optionally (0.005 to 0.012):1.

9. The positive active material according to claim 1 or 2, **characterized in that** (Dv90-Dv10)/Dv50 of the positive active material is ≥1.1, optionally ≥1.2.

10. The positive active material according to claim 1 or 2, **characterized in that** a compaction density of the positive active material under a pressure of 5000 kg/1.33 cm² is ≥3.4 g/cm³.

11. A preparation method for a positive active material, **characterized in that** the method comprises the following steps:
S1) performing low-temperature co-heating on a precursor of the positive active material and a lithium source to obtain a mixture, and mixing and sintering the mixture, a compound containing the M1 element, and a compound containing the M2 element to obtain a matrix material; and
S2) adding the matrix material obtained in the step S1) into an aqueous solution containing a soluble Co-containing compound and a soluble Li-containing compound, washing with water, filtering, and drying to obtain a positive active material;
wherein, in the step S1), a low-temperature co-heating temperature is 150 to 400 °C, optionally 200 to 300 °C, time is 1 to 6 h, optionally 2 to 4 h,
a chemical formula of the positive active material is Li₁₊ₐ[NiₓCo_{y}Mn_{z}M1_{b}M2_{c}]O₂, where, 0.05 < a < 0.5, 1/3 ≤ x < 1, 0 ≤ y < 1/3, 0 ≤ z < 1/3, 0 < b < 0.1, 0 < c < 0.1, x + y + z + b + c = 1, M1 is one or more elements selected from Mo, Zr, W, Sb, Nb, Te and Ga, M2 is one or more elements selected from Mg, Al, Ca and Ti, optionally, 0.1 < a < 0.2, 0.6 ≤ x < 1,
the positive active material is in a shape of particles, comprising a lithium-rich layer extending from a particle surface to an interior of the particle, in a single particle of the positive active material, on a cross section passing through the geometric center of the particle, a ratio of an average Li element content per unit area in the lithium-rich layer to an average Li element content per unit area in the non-lithium-rich layer is (> 1 to 1.5):1, and optionally (1.05 to 1.2):1.

12. The preparation method for the positive active material according to claim 11, **characterized in that** in the step S1), a molar ratio of the Li element in the lithium source to the metal element in the precursor of the positive active material is 1.2 to 1.5, optionally 1.25 to 1.4, the metal elements are Ni, Co and Mn, a sintering temperature is 600 to 850 °C, sintering time is 9 to 12 h, and a sintering atmosphere is air or oxygen, optionally oxygen.

13. The preparation method for the positive active material according to claim 11, **characterized in that** in the step S1), the compound containing the M1 element is one or more of an oxide, hydroxide, carbonate, oxalate or nitrate containing the M1 element, and an amount of the M1 element added in the step S1) is 2000 to 5000 ppm, optionally 3000 to 4000 ppm, based on a weight of the precursor of the positive active material; and the compound containing the M2 element is one or more of an oxide, hydroxide, carbonate, oxalate or nitrate containing the M2 element, and an amount of the M2 element added in the step S1) is 200 to 2000 ppm, optionally 400 to 1000 ppm, based on the weight of the precursor of the positive active material.

14. The preparation method for the positive active material according to claim 11, **characterized in that** in the step S2), the soluble Co-containing compound is selected from one or more of Co(CH₃COO)₂, CoC₂O₄, CoSO₄, Co(NO₃)₂ or CoCl₂, and an amount of the Co element added in the step S2) is 1000 to 20000 ppm, optionally 5000 to 13000 ppm, based on a weight of the precursor of the positive active material; and the soluble Li-containing compound is selected from one or more of Li₂SO₄, LiNO₃, LiC₂O₄, CH₃COOLi or LiCl, and an amount of the Li element added in the step S2) is 500 to 5000 ppm, optionally 1000 to 1500 ppm, based on the weight of the precursor of the positive active material.

15. The preparation method for the positive active material according to claim 11, **characterized in that** in the step S2), a water washing temperature is 0 to 100 °C, optionally 5 to 50 °C, and water washing time is 1 to 30 min, optionally 2 to 5 min.

16. The preparation method for the positive active material according to claim 11, **characterized in that** in the step S2), the drying is vacuum drying, and a drying temperature is 40 to 120 °C, optionally 80 to 100 °C, and drying time is 6 to 24 h, optionally 12 to 18 h.

17. The preparation method for the positive active material according to claim 11, **characterized in that** in the step S1), the lithium source is selected from at least one of LiOH·H₂O, Li₂CO₃, Li₂SO₄, LiNO₃, LiC₂O₄ or CH₃COOLi, optionally, at least one of LiOH·H₂O, Li₂SO₄ or LiNO₃.

18. The preparation method for the positive active material according to claim 11, **characterized in that** the method further comprises step S3): mixing the positive active material obtained in step S2) with a Co-containing compound and a Li-containing compound, sintering at a temperature of 500 to 800 °C, optionally 550 to 750 °C, for sintering time of 5 to 15 h, optionally 5 to 10 h, and in an air or O₂ sintering atmosphere, to obtain a positive active material having a coating, wherein a chemical formula of the coating is LiₑCoO₂, wherein 0 < e ≤ 1.

19. The preparation method for the positive active material according to claim 18, **characterized in that** in the step S3), the Co-containing compound is selected from at least one of Co₃O₄, Co(OH)₂, CoO, CoOOH, Co(CH₃COO)₂, CoC₂O₄ or CoCO₃, Dv50 of particles of the Co-containing compound is 0.001 to 10 µm, optionally 0.001 to 1 µm, and an amount of Co element added in the step S3) is 500 to 20000 ppm, optionally 2000 to 15000 ppm, based on a weight of the precursor of the positive active material; and the {1}Li-containing compound is selected from LiOH·H₂O, Li₂CO₃, Li₂SO₄, LiNO₃, LiC₂O₄ or CH₃COOLi, Dv50 of particles of the Li-containing compound is 0.001 to 1 µm, optionally 0.01 to 0.05 µm, and an amount of Li element added in the step S3) is 100 to 3000 ppm, optionally 500 to 1500 ppm, based on the weight of the precursor of the positive active material.

20. A secondary battery, **characterized in that** the secondary battery comprises the positive active material according to any one of claims 1 to 10 or the positive active material prepared by the method according to any one of claims 11 to 19.

21. An electrical device, **characterized in that** the electrical device comprises the secondary battery according to claim 20.
